# EUROPEAN PATENT APPLICATION

(11) **EP 4 132 162 A1**
(43) Date of publication of application: **08.02.2023**
(21) Application number: 21780753.6
(22) Date of filing: 01.04.2021
(51) Int. Cl.: H04W 72/04

(54) **RANDOM ACCESS METHOD AND DEVICE**

(30) Priority: 02.04.2020 CN 202010256292
(71) Applicant: Vivo Mobile Communication Co., Ltd., Dongguan, Guangdong 523863 (CN)
(72) Inventor: WEN, Ming, Dongguan, Guangdong 523863 (CN); BOUBACAR, Kimba Dit Adamou, Dongguan, Guangdong 523863 (CN)
(74) Representative: Raffay & Fleck
(86) International application number: PCT/CN2021/084962
(87) International publication number: WO 2021/197431

(57) **Abstract**

Disclosed in the embodiments of the present invention is a random access method and device, which are used for solving the problem of a terminal device being unable to effectively and quickly access a cell as the slice of the cell is not considered in the process of random access. Said method can be executed by a terminal device, and comprises: receiving an SIB message from a cell, the SIB message comprising slice information of the cell and a mapping relationship between the slice information and at least one of the following: a PRACH resource and a preamble; selecting a slice according to the slice information; and selecting, according to the mapping relationship, a preamble and a PRACH resource corresponding to the slice, so as to initiate a random access process.

## Description

### CROSS-REFERENCE

This application claims priority to Chinese Patent Application No. 202010256292.0, filed with the Chinese Patent Office on April 2, 2020, and entitled "RANDOM ACCESS METHOD AND DEVICE", which is incorporated herein by reference in its entirety.

### TECHNICAL FIELD

Embodiments of the present invention relate to the field of communications, and in particular, to a random access method and a device.

### BACKGROUND

A plurality of "virtual" end-to-end networks may be segmented on a hardware infrastructure by using the network slice (slice) technology. Each segmented virtual network is completely logically isolated from the terminal device to the access network, from the access network to the core network, and from the core network to the transmission network, and adapts to technical requirements of services thereof.

Because of a feature of complete "customizable", the network slice technology provides a broad industry application space for the operator; and in addition, for the upper-layer application service provider, the network slice technology may also be used to provide a more personalized service.

However, in the related art, the terminal device does not consider the slice of the cell when performing random access, and due to the lack of such a mechanism, the terminal device cannot access the cell effectively and quickly. Therefore, it is necessary to provide a fast random access mechanism.

### SUMMARY

Embodiments of the present invention are intended to provide a random access method and a device to solve the problem that a terminal device cannot access a cell effectively and quickly because a slice of the cell is not considered during a random access procedure.

According to a first aspect, a random access method is provided, where the method is performed by a terminal device and includes: receiving a system information block (SIB) message from a cell, where the SIB message includes slice information of the cell and a mapping relationship between the slice information and at least one of the following: a physical random access channel (PRACH) resource and a preamble; selecting a slice based on the slice information; and selecting, based on the mapping relationship, a preamble and a PRACH resource that are corresponding to the slice to initiate a random access procedure.

According to a second aspect, a random access method is provided, where the method is performed by a network device and includes: sending an SIB message, where the SIB message includes slice information of a cell and a mapping relationship between the slice information and at least one of the following: a PRACH resource and a preamble; the slice information is used by a terminal device to select a slice; and the mapping relationship is used by the terminal device to select a preamble and a PRACH resource that are corresponding to the slice to initiate a random access procedure.

According to a third aspect, a terminal device is provided, where the terminal device includes: a receiving module, configured to receive an SIB message from a cell, where the SIB message includes slice information of the cell and a mapping relationship between the slice information and at least one of the following: a physical random access channel (PRACH) resource and a preamble; a slice selecting module, configured to select a slice based on the slice information; and a sending module, configured to select, based on the mapping relationship, a preamble and a PRACH resource that are corresponding to the slice to initiate a random access procedure.

According to a fourth aspect, a network device is provided, where the network device includes: a sending module, configured to send an SIB message, where the SIB message includes slice information of the cell and a mapping relationship between the slice information and at least one of the following: a PRACH resource and a preamble; the slice information is used by a terminal device to select a slice; and the mapping relationship is used by the terminal device to select a preamble and a PRACH resource that are corresponding to the slice to initiate a random access procedure.

According to a fifth aspect, a terminal device is provided, including: a processor, a memory, and a computer program stored in the memory and executable on the processor. When the computer program is executed by the processor, steps of the random access method in the first aspect are implemented.

According to a sixth aspect, a network device is provided, including: a processor, a memory, and a computer program stored in the memory and executable on the processor. When the computer program is executed by the processor, steps of the random access method provided in the second aspect are implemented.

According to a seventh aspect, a computer-readable storage medium is provided, where the computer-readable storage medium stores a computer program, and when the computer program is executed by a processor, the random access method provided in either the first aspect or the second aspect is implemented.

In this embodiment of the present invention, the SIB message includes the slice information of the cell and the mapping relationship between the slice information and at least one of the following: the PRACH resource and the preamble. In this way, in the random access procedure, the terminal device may use the preamble or the PRACH resource for sending the preamble to distinguish different slices, so as to quickly realize the random access procedure based on the slice.

### BRIEF DESCRIPTION OF DRAWINGS

The accompanying drawings illustrated herein are provided to further understand this application and form a part of this application. The exemplary embodiments of this application and the descriptions thereof are used to explain this application and do not constitute an improper limitation on this application. In the accompanying drawings:
FIG. 1 is a schematic flowchart of a random access method according to an embodiment of the present invention;
FIG. 2 is a schematic diagram of a plurality of slices sharing one PRACH time-frequency resource block according to an embodiment of the present invention;
FIG. 3 is a schematic diagram of a plurality of slices using different PRACH time-frequency resource blocks respectively according to an embodiment of the present invention;
FIG. 4 is a schematic flowchart of a random access method according to another embodiment of the present invention;
FIG. 5 is a schematic flowchart of a random access method according to still another embodiment of the present invention;
FIG. 6 is a schematic structural diagram of a terminal device according to an embodiment of the present invention;
FIG. 7 is a schematic structural diagram of a network device according to an embodiment of the present invention;
FIG. 8 is a schematic structural diagram of a terminal device according to another embodiment of the present invention; and
FIG. 9 is a schematic structural diagram of a network device according to another embodiment of the present invention.

### DESCRIPTION OF EMBODIMENTS

To make the objectives, technical solutions, and advantages of this application clearer, the following clearly and completely describes the technical solutions of this application with reference to the specific embodiments of this application and the corresponding accompanying drawings. Apparently, the described embodiments are merely some rather than all of the embodiments of this application. All other embodiments obtained by a person of ordinary skill in the art based on the embodiments of this application without creative efforts shall fall within the protection scope of this application. The term "and/or" in the embodiments of this specification indicates at least one of the former item and the latter item.

It should be understood that the technical solutions in the embodiments of the present invention may be applied to various communication systems, such as a long term evolution (Long Term Evolution, LTE) system, a LTE frequency division duplex (Frequency Division Duplex, FDD) system, an LTE time division duplex (Time Division Duplex, TDD) system, a universal mobile telecommunications system (Universal Mobile Telecommunication System, UMTS) or a worldwide interoperability for microwave access (Worldwide Interoperability for Microwave Access, WiMAX) communication system, a 5G system, or a new radio (New Radio, NR) system, or a subsequent evolved communication system.

In the embodiments of the present invention, a terminal device may include, but is not limited to a mobile station (Mobile Station, MS), a mobile terminal (Mobile Terminal), a mobile telephone (Mobile Telephone), user equipment (User Equipment, UE), a handset (handset), portable equipment (portable equipment), a vehicle (vehicle), and the like. The terminal device may communicate with one or more core networks by using a radio access network (Radio Access Network, RAN). For example, the terminal device may be a mobile telephone (or referred to as a "cellular" telephone), or a computer having a wireless communication function; or the terminal device may be a portable, pocket-sized, handheld, computer built-in, or vehicle-mounted mobile apparatus.

In the embodiments of the present invention, a network device is an apparatus that is deployed in a radio access network and that is configured to provide a wireless communication function for the terminal device. The network device may be a base station, and the base station may include various types of macro base stations, micro base stations, relay stations, or access points. In systems using different radio access technologies, names of devices having a base station function may be different. For example, in an LTE network, the device is referred to as an evolved NodeB (Evolved NodeB, eNB or eNodeB); in a 3rd Generation (3rd Generation, 3G) network, the device is referred to as a NodeB (NodeB); in a 5G system, the device is referred to as a next generation NodeB (gNB); or in the subsequent evolved communications system, the device is referred to as a network device. However, the terms do not constitute a limitation.

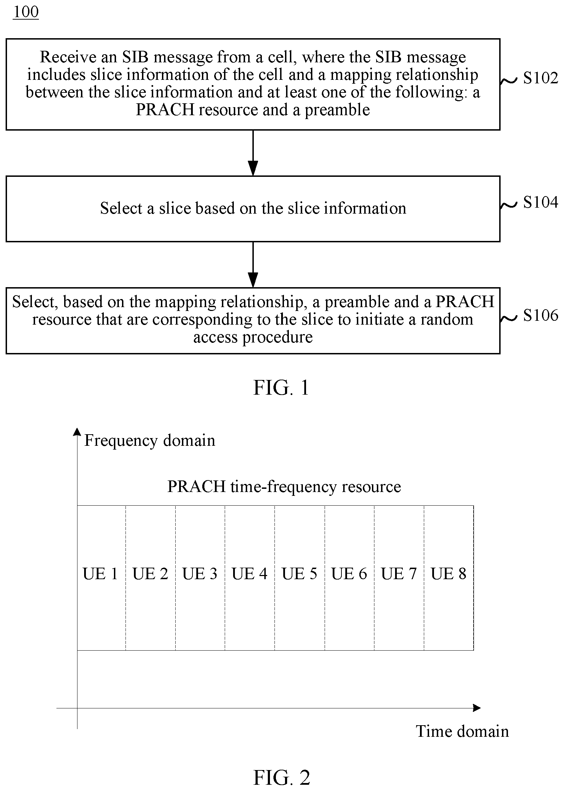

As shown in FIG. 1, an embodiment of the present invention provides a random access method 100. The method may be performed by a terminal device. In other words, the method may be performed by software or hardware installed on the terminal device. The method includes the following steps.

S 102: Receive a system information block (System Information Block, SIB) message from a cell, where the SIB message includes slice information of the cell and a mapping relationship between the slice information and at least one of the following: a physical random access channel (Physical Random Access Channel, PRACH) resource and a preamble.

In this embodiment, the slice information of the cell in the SIB message may include: information used to indicate whether the slice is supported. If the information used to indicate whether the slice is supported is to support the slice, the slice information of the cell may further include identifier information for supporting the slice. The identifier information of the slice may include at least one of the following: a slice identifier (ID), a slice type (type), a tenant type, a tenant identifier, a network function identifier, and the like. In a specific implementation, the identifier information of the slice may be used to indicate to the terminal device that the cell supports the slice.

There may be one or more pieces of slice information in the SIB message. In an embodiment, the mapping relationship includes at least one of 1) and 2) as described below.
1) Mapping relationships between a plurality of pieces of slice information and a plurality of different preambles.

In this example, a plurality of different slices may be corresponding to a plurality of different preamble ranges. Optionally, any two slices in the plurality of different slices have different preamble ranges. In this example, different preambles (or referred to as preambles of different ranges) may be used to distinguish different slices.

Specifically, in this example, a slice 1 is corresponding to a preamble 0 to a preamble 31; and a slice 2 is corresponding to a preamble 32 to a preamble 63. The slice 1 and the slice 2 have different preamble ranges.

Optionally, the plurality of slices may further share a same PRACH time-frequency resource block. For example, the slice 1 and the slice 2 in the foregoing example may share a same PRACH time-frequency resource block.

Optionally, the plurality of slices may further use different PRACH time-frequency resource blocks. For example, the slice 1 and the slice 2 in the foregoing example may use different PRACH time-frequency resource blocks.
2) Mapping relationships between the plurality of pieces of slice information and a plurality of different PRACH time-frequency resource blocks.

In this example, a plurality of different slices may be corresponding to a plurality of different PRACH time-frequency resource blocks. Optionally, any two slices in the plurality of different slices have different PRACH time-frequency resource blocks. In this example, different PRACH time-frequency resource blocks may be used to distinguish different slices.

Specifically, in this example, the slice 1 is corresponding to a PRACH time-frequency resource block 1; and the slice 2 is corresponding to a PRACH time-frequency resource block 2. The slice 1 and the slice 2 have different PRACH time-frequency resource blocks.

Optionally, the plurality of slices may further share a same preamble range. For example, the slice 1 and the slice 2 in the foregoing example may share a same preamble range.

Optionally, the plurality of slices may further use different preamble ranges. For example, the slice 1 and the slice 2 in the foregoing example may use different preamble ranges.

Optionally, the "different slices" mentioned in the plurality of examples may refer to different slices under a same public land mobile network (Public Land Mobile Network, PLMN), or different slices under different PLMNs.

S 104: Select a slice based on the slice information.

S106: Select, based on the mapping relationship, a preamble and a PRACH resource that are corresponding to the slice to initiate a random access procedure.

In this embodiment, the terminal device may select a slice that is supported by the terminal device and that is available to the cell from the slice information of the cell in the SIB message.

After selecting the slice, the terminal device may further select, based on the mapping relationship, a preamble and a PRACH resource that are corresponding to the slice to initiate a random access procedure.

Specifically, for example, in a case that the mapping relationship includes the mapping relationship between a slice and a preamble, the terminal device may determine, based on the mapping relationship, a preamble corresponding to the slice, and send Msg1 (4-step RACH) or MsgA (2-step RACH) on an appropriate PRACH resource, and perform a subsequent random access procedure.

In a case that the mapping relationship includes the mapping relationship between a slice and a PRACH resource, the terminal device may determine the preamble, determine, based on the mapping relationship, a PRACH resource corresponding to the slice, send Msg1 (4-step RACH) or MsgA (2-step RACH) on the PRACH resource, and perform a subsequent random access procedure.

In a case that the mapping relationship includes the mapping relationship between a slice and a PRACH resource, and the mapping relationship between a slice and a preamble, the terminal device may determine, based on the mapping relationship, a preamble, and determine, based on the mapping relationship, a PRACH resource corresponding to the slice, send Msg1 (4-step RACH) or MsgA (2-step RACH) on the PRACH resource, and perform a subsequent random access procedure.

According to the random access method in this embodiment of the present invention, the SIB message includes the slice information of the cell and the mapping relationship between the slice information and at least one of the following: the PRACH resource and the preamble. In this way, in the random access procedure, the terminal device may use the preamble or the PRACH resource for sending the preamble to distinguish different slices, so as to quickly realize the random access procedure based on the slice.

Optionally, before S 102 of the embodiment 100, the following steps may further be included: receiving a master information block (Master Information Block, MIB) message from a cell, where the receiving an SIB message from a cell includes: continuing to receive the SIB message from the cell when at least one of the following conditions is satisfied: 1) in the MIB message, a cell state of the cell is indicated as not barred; and 2) the MIB message includes an identifier of a slice supported by the terminal device.

In this example, if the terminal supports simultaneously reading MIB messages of a plurality of cells, the terminal device can roughly determine which cell to select for access based on the MIB messages of the plurality of cells, that is, the terminal device may know whether to select a cell for access only by reading an MIB message thereof. In this way, the terminal device may access the cell effectively and quickly. Certainly, in other examples, if the slice information is only carried in the SIB message, the terminal device may continue to read the SIB message, so as to read the slice information of the cell.

The foregoing embodiments describe a contention-based random access procedure. In other embodiments, the network device may send dedicated slice information to the terminal device through Radio Resource Control (Radio Resource Control, RRC) dedicated signalling (dedicated signalling). If receiving an RRC dedicated message before performing random access, the terminal device may perform random access based on the RRC dedicated message.

In a specific embodiment, the terminal device may receive an RRC dedicated message, where the RRC dedicated message includes one or more preambles, and at least one preamble is corresponding to a dedicated slice.

In this way, the terminal device may select one dedicated slice, and select a preamble and a PRACH resource that are corresponding to the dedicated slice to initiate a random access procedure.

Specifically, for example, the terminal device selects one supportable slice from obtained dedicated slices, selects a preamble corresponding to the slice, and sends Msg1 (4-step RACH) or MsgA (2-step RACH) on a corresponding PRACH time-frequency resource block.

Optionally, in an embodiment, the RRC dedicated message includes at least one of 1) and 2) as described below.
1) Mapping relationships between a plurality of pieces of dedicated slice information and a plurality of different preambles.

In this example, a plurality of different dedicated slices may be corresponding to a plurality of different preamble ranges. Optionally, any two dedicated slices in the plurality of different dedicated slices have different preamble ranges. In this example, different preambles (or referred to as preambles of different ranges) may be used to distinguish different dedicated slices.

Specifically, in this example, a dedicated slice 1 is corresponding to a preamble 0 to a preamble 31; and a dedicated slice 2 is corresponding to a preamble 32 to a preamble 63. The slice dedicated 1 and the dedicated slice 2 have different preamble ranges.

Optionally, the plurality of dedicated slices may further share a same PRACH time-frequency resource block. For example, the dedicated slice 1 and the dedicated slice 2 in the foregoing example may share a same PRACH time-frequency resource block.

Optionally, the plurality of dedicated slices may further use different PRACH time-frequency resource blocks. For example, the dedicated slice 1 and the dedicated slice 2 in the foregoing example may use different PRACH time-frequency resource blocks.
2) Mapping relationships between the plurality of pieces of dedicated slice information and a plurality of different PRACH time-frequency resource blocks.

In this example, a plurality of different dedicated slices may be corresponding to a plurality of different PRACH time-frequency resource blocks. Optionally, any two dedicated slices in the plurality of different dedicated slices have different PRACH time-frequency resource blocks. In this example, different PRACH time-frequency resource blocks may be used to distinguish different slices.

Specifically, in this example, the dedicated slice 1 is corresponding to a PRACH time-frequency resource block 1; and the dedicated slice 2 is corresponding to a PRACH time-frequency resource block 2. The dedicated slice 1 and the dedicated slice 2 have different PRACH time-frequency resource blocks.

Optionally, the plurality of dedicated slices may further share a same preamble range. For example, the dedicated slice 1 and the dedicated slice 2 in the foregoing example may share a same preamble range.

Optionally, the plurality of dedicated slices may further use different preamble ranges. For example, the dedicated slice 1 and the dedicated slice 2 in the foregoing example may use different preamble ranges.

To describe the random access method provided in the embodiments of the present invention in detail, the random access method will be described below with reference to two specific embodiments.

### Embodiment 1:

Embodiment 1 describes a 4-step contention-based random access (4-step CBRA) procedure, which includes the following steps.

Step 1. Before initiating the random access, the terminal device may first read a system message from a cell, the system message includes an MIB message and an SIB message, and at least one of the following two steps is executed, that is, step 1.1 may be executed only; step 1.2 may be executed only; and step 1.1 and step 1.2 may be executed simultaneously, where an execution sequence between step 1.1 and step 1.2 is not limited in this embodiment.

Step 1.1. The terminal device parses the MIB message and the SIB message, where a "cell state" in the MIB message is indicated as: "not barred" (not barred); and the "cell state" in the SIB message is indicated as: "not reserved" for the operator ("not reserved" for operator use) and "not true" for other use ("not true" for other use), indicating that the current cell may be regarded as a candidate cell.

Step 1.2. The MIB message of the cell indicates that the cell supports all pieces of the slice information, and the terminal device supports simultaneously reading MIB messages of a plurality of cells. When the terminal device reads slice information that can be supported by the terminal device in a cell, it indicates that the current cell can be regarded as the candidate cell.

Step 2. The terminal device continues to read the SIB message of the cell.

In this embodiment, the mapping relationship that is read by the terminal device in the SIB message and that is between the slice information and at least one of the PRACH resource and the preamble is shown in a) and b).
a) Different slices are corresponding to different preamble ranges, but all slices share a same PRACH time-frequency resource block.

For example, if a cell supports 64 preambles and 8 different types of slices, each slice may be corresponding to 8 preambles, for example, a slice 1 is corresponding to a preamble 0 to a preamble 7; a slice 2 is corresponding to a preamble 8 to a preamble 15, and the like. In this way, the network device may determine, based on preamble information in the received Msg1, a type of the slice based on the preamble.

Optionally, in a same slot (slot), Msg1s sent by different terminal devices are on a same PRACH time-frequency resource block. Specifically, as shown in FIG. 2, in FIG. 2, Msg1s sent by UE 1 to UE 8 are on a same PRACH time-frequency resource block.
b) Different slices have a same preamble range (for example, all slices supported by a cell share a same preamble range), but different slices have different PRACH time-frequency resource blocks.

For example, if a cell supports 64 preambles and 3 different types of slices, namely a slice 1, a slice 2, and a slice 3, a quantity of preambles supported by the three slices is all 64.

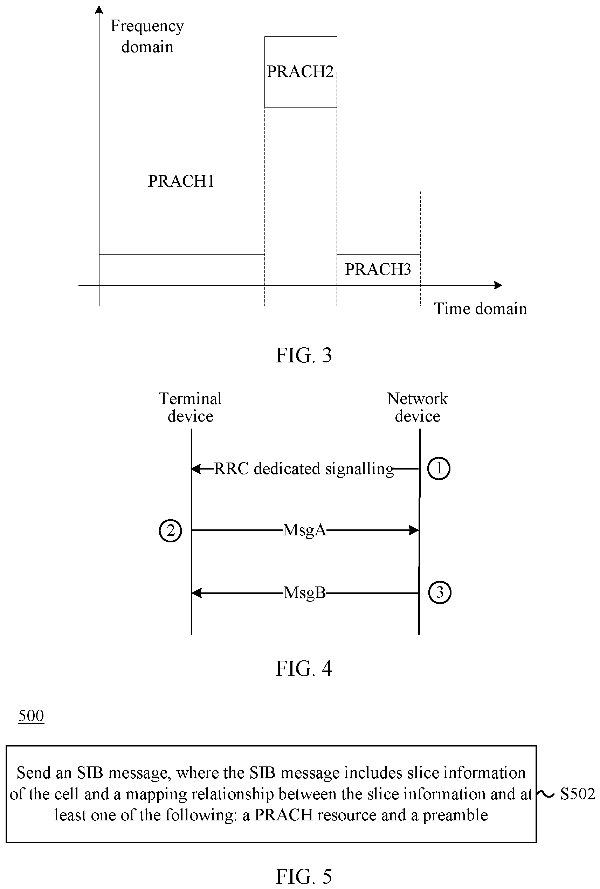

Optionally, different slices are corresponding to different PRACH time-frequency resource blocks. Specifically, as shown in FIG. 3, FIG. 3 shows three different PRACH time-frequency resource blocks: a PRACH 1, a PRACH 2, and a PRACH 3, where the slice 1 is corresponding to the PRACH 1, the slice 2 is corresponding to the PRACH 2, and the slice 3 is corresponding to the PRACH 3.

The "different slices" mentioned in the foregoing examples may refer to different slices under a same PLMN, or different slices under different PLMNs.

Step 3. The terminal device selects one supportable slice from candidate slices, selects a preamble corresponding to the slice, and sends Msg1 on a corresponding PRACH time-frequency resource block.

After receiving the Msg1 sent by the terminal device, the network device replies with a random access response (Random Access Response, RAR) message, and the RAR message is also referred to as Msg2.

Step 4. The terminal device blindly detects a physical downlink control channel (Physical Downlink Control Channel, PDCCH), decodes RAR data carried on a corresponding physical downlink shared channel (Physical Downlink Shared Channel, PDSCH), and uses an allocated temporary cell-radio network temporary identifier (Temporary Cell-Radio Network Temporary Identifier, TC-RNTI) as scrambling code of Msg3 to send Msg3 to the network device.

Then the network device sends Msg4 to the terminal device, if the terminal device detects the PDCCH and successfully decodes the corresponding PDSCH, and has a matched contention resolution (Contention Resolution) medium access control-control element (Medium Access Control-Control Element, MAC CE), it indicates that the terminal device is successfully connected.

Step 5. The terminal device sends a hybrid automatic repeat request acknowledgment (Hybrid Automatic Repeat Request Acknowledgment, HARQ ACK) to the network device, the network device replies with an acknowledgment message (ACK), and the random access procedure ends.

### Embodiment 2

Embodiment 2 describes a 2-step contention-free random access (2-step CFRA) procedure, and as shown in FIG. 4, the following steps are included.

Step 1. When being in a connected state, the terminal device receives RRC dedicated signalling delivered by a network device side.

The RRC dedicated signalling (dedicated signalling) includes a preamble(s), and at least one preamble is corresponding to a dedicated slice.

In addition, the RRC dedicated signalling further includes a PRACH time-frequency resource location required for sending MsgA.

Step 2. The terminal device selects one supportable slice from obtained dedicated slices, selects a preamble corresponding to the slice, and sends MsgA on a corresponding PRACH time-frequency resource block.

Step 3. After receiving the MsgA sent by the terminal device, the network device returns the MsgB message, and the random access is finished.

The random access method according to an embodiment of the present invention is described above in detail with reference to FIG 1. The random access method according to another embodiment of the present invention is described in detail below with reference to FIG. 5. It may be understood that interaction between a network device and a terminal device described on the network device side is the same as that described on the terminal device side in the method shown in FIG. 1. To avoid repetition, relevant descriptions are appropriately omitted.

FIG. 5 is a schematic flowchart of implementing a random access method according to an embodiment of the present invention, and the method may be applied to a network device side. As shown in FIG. 5, the method 500 includes the following steps.

S502: Send an SIB message, where the SIB message includes slice information of the cell and a mapping relationship between the slice information and at least one of the following: a PRACH resource and a preamble.

The slice information is used by the terminal device to select a slice, and the mapping relationship is used by the terminal device to select a preamble and a PRACH resource that are corresponding to the slice to initiate a random access procedure.

In this embodiment of the present invention, the SIB message includes the slice information of the cell and the mapping relationship between the slice information and at least one of the following: the PRACH resource and the preamble. In this way, in the random access procedure, the terminal device may use the preamble or the PRACH resource for sending the preamble to distinguish different slices, so as to quickly realize the random access procedure based on the slice.

Optionally, as an embodiment, the method further includes: sending an MIB message, where in the MIB message, a cell state of the cell is indicated as not barred; and/or the MIB message includes an identifier of a slice supported by the terminal device.

Optionally, as an embodiment, the mapping relationship includes at least one of the following: mapping relationships between a plurality of pieces of slice information and a plurality of different preambles; and mapping relationships between the plurality of pieces of slice information and a plurality of different PRACH time-frequency resource blocks.

Optionally, as an embodiment, the plurality of pieces of slice information include slice information under a plurality of different PLMNs.

Optionally, as an embodiment, the method further includes: sending an RRC dedicated message, where the RRC dedicated message includes one or more preambles, and at least one preamble is corresponding to a dedicated slice; and the RRC dedicated message is used by the terminal device to select one dedicated slice, and select a preamble and a PRACH resource that are corresponding to the dedicated slice to initiate a random access procedure.

Optionally, as an embodiment, the RRC dedicated message includes at least one of the following: mapping relationships between a plurality of dedicated slices and a plurality of different preambles; and mapping relationships between the plurality of dedicated slices and a plurality of different PRACH time-frequency resource blocks.

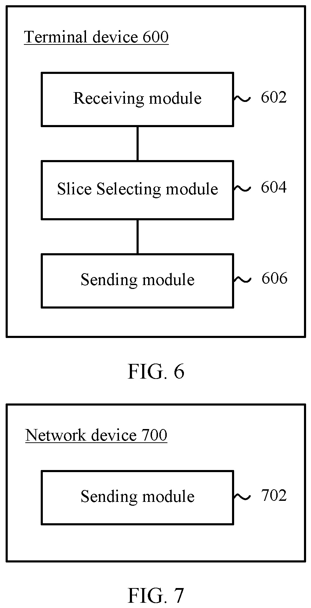

The random access method according to the embodiments of the present invention is described above in detail with reference to FIG. 1 to FIG. 5. A terminal device according to an embodiment of the present invention is described in detail below with reference to FIG. 6.

FIG. 6 is a schematic structural diagram of a terminal device according to an embodiment of the present invention. As shown in FIG. 6, a terminal device 600 includes the following modules:
a receiving module 602, configured to receive an SIB message from a cell, where the SIB message includes slice information of the cell and a mapping relationship between the slice information and at least one of the following: a PRACH resource and a preamble;
a slice selecting module 604, configured to select a slice based on the slice information; and
a sending module 606, configured to select, based on the mapping relationship, a preamble and a PRACH resource that are corresponding to the slice to initiate a random access procedure.

In this embodiment of the present invention, the SIB message includes the slice information of the cell and the mapping relationship between the slice information and at least one of the following: the PRACH resource and the preamble. In this way, in the random access procedure, the terminal device may use the preamble or the PRACH resource for sending the preamble to distinguish different slices, so as to quickly realize the random access procedure based on the slice.

Optionally, as an embodiment, the receiving module 602 may be configured to: receive a master information block (MIB) message from the cell; receive the SIB message from the cell when at least one of the following conditions is satisfied: a cell state of the cell is indicated as not barred; and the MIB message includes an identifier of a slice supported by the terminal device.

Optionally, as an embodiment, the mapping relationship includes at least one of the following: mapping relationships between a plurality of pieces of slice information and a plurality of different preambles; and mapping relationships between the plurality of pieces of slice information and a plurality of different PRACH time-frequency resource blocks.

Optionally, as an embodiment, the plurality of pieces of slice information include slice information under a plurality of different public land mobile networks (PLMN).

Optionally, as an embodiment, the receiving module 602 may be configured to receive an RRC dedicated message, where the RRC dedicated message includes one or more preambles, and at least one preamble is corresponding to a dedicated slice; the slice selecting module 604 may be configured to select one dedicated slice, and select a preamble and a PRACH resource that are corresponding to the dedicated slice; and the sending module 606 may be configured to initiate a random access procedure.

Optionally, as an embodiment, the RRC dedicated message includes at least one of the following: mapping relationships between a plurality of dedicated slices and a plurality of different preambles; and mapping relationships between the plurality of dedicated slices and a plurality of different PRACH time-frequency resource blocks.

The terminal device 600 according to this embodiment of the present invention may be referenced to the procedure corresponding to the method 100 according to the corresponding embodiments of the present invention. Furthermore, each unit/module in the terminal device 600 and the foregoing other operations and/or functions are used to implement corresponding procedure of the method 100, and the same or equivalent technical effects can be achieved. For brevity, details are not provided herein again.

FIG. 7 is a schematic structural diagram of a network device according to an embodiment of the present invention. As shown in FIG. 7, the network device 700 includes the following modules:
a sending module 702, configured to send an SIB message, where the SIB message includes slice information of a cell and a mapping relationship between the slice information and at least one of the following: a PRACH resource and a preamble; the slice information is used by a terminal device to select a slice; and the mapping relationship is used by the terminal device to select a preamble and a PRACH resource that are corresponding to the slice to initiate a random access procedure.

In this embodiment of the present invention, the SIB message includes the slice information of the cell and the mapping relationship between the slice information and at least one of the following: the PRACH resource and the preamble. In this way, in the random access procedure, the terminal device may use the preamble or the PRACH resource for sending the preamble to distinguish different slices, so as to quickly realize the random access procedure based on the slice.

Optionally, as an embodiment, the sending module 702 may be configured to send an MIB message, where in the MIB message, a cell state of the cell is indicated as not barred; and/or the MIB message includes an identifier of a slice supported by the terminal device.

Optionally, as an embodiment, the mapping relationship includes at least one of the following: mapping relationships between a plurality of pieces of slice information and a plurality of different preambles; and mapping relationships between the plurality of pieces of slice information and a plurality of different PRACH time-frequency resource blocks.

Optionally, as an embodiment, the plurality of pieces of slice information include slice information under a plurality of different PLMNs.

Optionally, as an embodiment, the sending module 702 may be configured to send an RRC dedicated message, where the RRC dedicated message includes one or more preambles, and at least one preamble is corresponding to a dedicated slice; and the RRC dedicated message is used by the terminal device to select one dedicated slice, and select a preamble and a PRACH resource that are corresponding to the dedicated slice to initiate a random access procedure.

Optionally, as an embodiment, the RRC dedicated message includes at least one of the following: mapping relationships between a plurality of dedicated slices and a plurality of different preambles; and mapping relationships between the plurality of dedicated slices and a plurality of different PRACH time-frequency resource blocks.

The network device 700 according to this embodiment of the present invention may be referenced to the procedure corresponding to the method 500 according to the corresponding embodiments of the present invention. Furthermore, each unit/module in the network device 700 and the foregoing other operations and/or functions are used to implement corresponding procedure of the method 500, and the same or equivalent technical effects can be achieved. For brevity, details are not provided herein again.

The embodiments in this specification are described in a progressive manner. Each embodiment usually focuses on a difference from another embodiment. For a same or similar part of the embodiments, refer to each other. A device embodiment is described simply because the device embodiment is similar to the method embodiment. For related details, please refer to some description of the method embodiment.

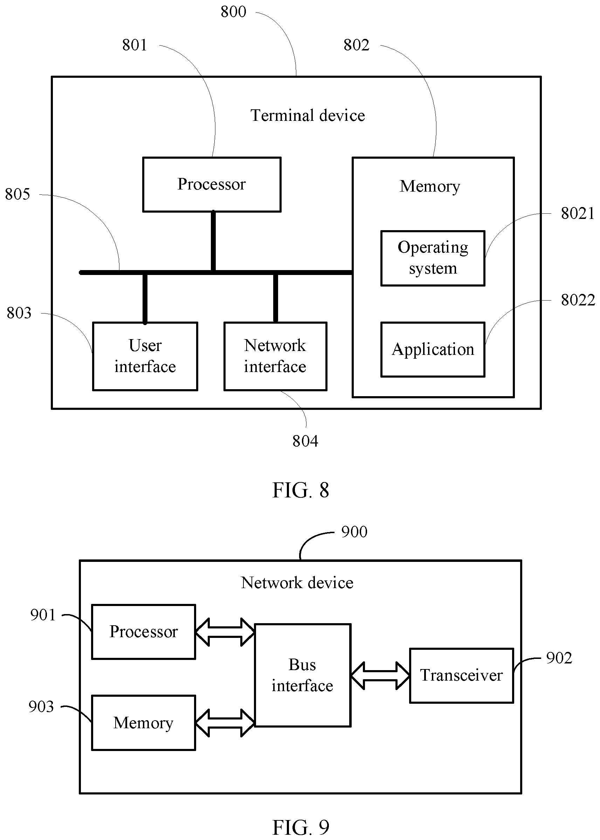

FIG. 8 is a block diagram of a terminal device according to another embodiment of the present invention. As shown in FIG. 8, a terminal device 800 includes: at least one processor 801, a memory 802, at least one network interface 804, and a user interface 803. All components in the terminal device 800 are coupled together through a bus system 805. It can be understood that the bus system 805 is configured to implement connection and communication between these components. In addition to a data bus, the bus system 805 further includes a power bus, a control bus, and a status signal bus. However, for clear description, various buses are marked as the bus system 805 in FIG. 8.

The user interface 803 may include a display, a keyboard, a clicking device (for example: a mouse and a trackball (trackball)), a touch panel or a touchscreen.

It may be understood that the memory 802 in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 802 in the system and the method that are described in the embodiments of the present invention is to include but is not limited to these memories and any other suitable types of memories.

In some implementation manners, the memory 802 stores the following element, an executable module or a data structure, or a subset thereof, or an extension set thereof: an operating system 8021 and an application program 8022.

The operating system 8021 includes various system programs, for example, a framework layer, a kernel library layer, and a driver layer, and is configured to implement various basic services and process hardware-based tasks. The application program 8022 includes various applications, for example, a media player (Media Player), a browser (Browser), and the like, to implement various application services. A program for implementing the method in this embodiment of the present invention may be included in the application program 8022.

In this embodiment of the present invention, the terminal device 800 further includes a computer program stored in a memory 802 and capable of running on a processor 801; and when the computer program is executed by the processor 801, the steps of the following method embodiment 100 are implemented.

The method disclosed in the foregoing embodiment of the present invention may be applied to the processor 801, or implemented by the processor 801. The processor 801 may be an integrated circuit chip having a signal processing capability. During implementation, each step of the foregoing method may be completed by using an integrated logic circuit of hardware in the processor 801 or an instruction in a form of software. The processor 801 may be a general purpose processor, a digital signal processor (Digital Signal Processor, DSP), an application specific integrated circuit (Application Specific Integrated Circuit, ASIC), a field programmable gate array (Field Programmable Gate Array, FPGA), another programmable logic device, a discrete gate, a transistor logic device, or a discrete hardware component. The methods, steps, and logical block diagrams disclosed in the embodiments of the present invention may be implemented or executed. The general-purpose processor may be a microprocessor, or the processor may be any conventional processor or the like. The steps of the method disclosed with reference to the embodiments of the present invention may be directly performed by a hardware decoding processor, or may be performed by using a combination of hardware and software modules in a decoding processor. The software module may be located in a computer-readable storage medium that is mature in the art, such as a random access memory, a flash memory, a read-only memory, a programmable read-only memory, an electrically erasable programmable memory, or a register. The computer-readable storage medium is located in the memory 802, and the processor 801 reads information from the memory 802 and completes the steps of the foregoing method in combination with its hardware. Specifically, the computer-readable storage medium stores a computer program, and when the computer program is executed by the processor 801, the steps of the foregoing method embodiment 100 are performed.

It may be understood that the embodiments described in the embodiments of the present invention may be implemented by hardware, software, firmware, middleware, microcode, or a combination thereof. For implementation with hardware, the processing unit can be implemented in one or more application specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Arrays, FPGA), a general purpose processor, a controller, a microcontroller, a microprocessor, another electronic unit configured to perform the functions described in this application, or a combination thereof.

For software implementations, the techniques described in embodiments of the present invention may be implemented by modules (for example, processes or functions) that perform the functions described in the embodiments of the present invention. A software code may be stored in the memory and executed by the processor. The memory may be implemented in the processor or outside the processor.

The terminal device 800 can implement each process implemented by the terminal device in the foregoing embodiments, and the same or equivalent technical effect can be achieved. To avoid repetition, details are not described herein again.

Referring to FIG. 9, FIG. 9 is a structural diagram of a network device to which an embodiment of the present invention is applied. The network device can implement details of the method embodiment 500 and achieve a same effect. As shown in FIG. 9, a network device 900 includes a processor 901, a transceiver 902, a memory 903, and a bus interface.

In the embodiment of the present invention, the network device 900 further includes: a computer program stored in the memory 903 and capable of running on the processor 901. When the computer program is executed by the processor 901, the steps of the method embodiment 500 are implemented.

In FIG. 9, a bus architecture may include any quantity of interconnected buses and bridges, and is specifically linked by various circuits of one or more processors represented by the processor 901 and a memory represented by the memory 903. The bus architecture may further link various other circuits such as a peripheral device, a voltage regulator, and a power management circuit together. These are all well-known in the art, and therefore are not further described in this specification. The bus interface provides interfaces. The transceiver 902 may be a plurality of elements, in other words, includes a transmitter and a receiver, and provides a unit configured to communicate with various other apparatuses on a transmission medium.

The processor 901 is responsible for managing the bus architecture and common processing, and the memory 903 may store data used when the processor 901 performs an operation.

An embodiment of the present invention further provides a computer-readable storage medium. The computer-readable storage medium stores a computer program, and when a processor executes the computer program, the processes of any one of the foregoing method embodiment 100 and the method embodiment 500 are implemented, and the same technical effects can be achieved. To avoid repetition, details are not described herein again. The computer-readable storage medium includes a read-only memory (Read-Only Memory, ROM for short), a random access memory (Random Access Memory, RAM for short), a magnetic disk, an optical disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present invention.

The embodiments of the present invention are described above with reference to the accompanying drawings, but the present invention is not limited to the above specific implementations, and the above specific implementations are only illustrative and not restrictive. Under the enlightenment of the present invention, those of ordinary skill in the art can make many forms without departing from the purpose of the present invention and the protection scope of the claims, all of which fall within the protection of the present invention.

## Claims

1. A random access method, wherein the method is performed by a terminal device, and the method comprises:
receiving a system information block (SIB) message from a cell, wherein the SIB message comprises slice information of the cell and a mapping relationship between the slice information and at least one of the following: a physical random access channel (PRACH) resource and a preamble;
selecting a slice based on the slice information; and
selecting, based on the mapping relationship, a preamble and a PRACH resource that are corresponding to the slice to initiate a random access procedure.

2. The method according to claim 1, wherein the method further comprises:
receiving a master information block (MIB) message from the cell, wherein the receiving an SIB message from a cell comprises: receiving the SIB message from the cell when at least one of the following conditions is satisfied:
a cell state of the cell is indicated as not barred; and
the MIB message comprises an identifier of a slice supported by the terminal device.

3. The method according to claim 1, wherein the mapping relationship comprises at least one of the following:
mapping relationships between a plurality of pieces of slice information and a plurality of different preambles; and
mapping relationships between the plurality of pieces of slice information and a plurality of different PRACH time-frequency resource blocks.

4. The method according to claim 3, wherein
the plurality of pieces of slice information comprise slice information under a plurality of different public land mobile networks (PLMN).

5. The method according to claim 1, wherein the method further comprises:
receiving a radio resource control (RRC) dedicated message, wherein the RRC dedicated message comprises one or more preambles, and at least one preamble is corresponding to a dedicated slice; and
selecting one dedicated slice, and selecting a preamble and a PRACH resource that are corresponding to the dedicated slice to initiate a random access procedure.

6. The method according to claim 5, wherein the RRC dedicated message comprises at least one of the following:
mapping relationships between a plurality of dedicated slices and a plurality of different preambles; and
mapping relationships between the plurality of dedicated slices and a plurality of different PRACH time-frequency resource blocks.

7. A random access method, wherein the method is performed by a network device, and the method comprises:
sending an SIB message, wherein the SIB message comprises slice information of a cell and a mapping relationship between the slice information and at least one of the following: a PRACH resource and a preamble; the slice information is used by a terminal device to select a slice; and the mapping relationship is used by the terminal device to select a preamble and a PRACH resource that are corresponding to the slice to initiate a random access procedure.

8. The method according to claim 7, wherein the method further comprises: sending an MIB message, wherein
in the MIB message, a cell state of the cell is indicated as not barred; and/or
the MIB message comprises an identifier of a slice supported by the terminal device.

9. The method according to claim 1, wherein the mapping relationship comprises at least one of the following:
mapping relationships between a plurality of pieces of slice information and a plurality of different preambles; and
mapping relationships between the plurality of pieces of slice information and a plurality of different PRACH time-frequency resource blocks.

10. The method according to claim 9, wherein
the plurality of pieces of slice information comprise slice information under a plurality of different PLMNs.

11. The method according to claim 7, wherein the method further comprises:
sending an RRC dedicated message, wherein the RRC dedicated message comprises one or more preambles, and at least one preamble is corresponding to a dedicated slice; and the RRC dedicated message is used by the terminal device to select one dedicated slice, and select a preamble and a PRACH resource that are corresponding to the dedicated slice to initiate a random access procedure.

12. The method according to claim 11, wherein the RRC dedicated message comprises at least one of the following:
mapping relationships between a plurality of dedicated slices and a plurality of different preambles; and
mapping relationships between the plurality of dedicated slices and a plurality of different PRACH time-frequency resource blocks.

13. A terminal device, comprising:
a receiving module, configured to receive an SIB message from a cell, wherein the SIB message comprises slice information of the cell and a mapping relationship between the slice information and at least one of the following: a physical random access channel (PRACH) resource and a preamble;
a slice selecting module, configured to select a slice based on the slice information; and
a sending module, configured to select, based on the mapping relationship, a preamble and a PRACH resource that are corresponding to the slice to initiate a random access procedure.

14. A network device, comprising:
a sending module, configured to send an SIB message, wherein the SIB message comprises slice information of a cell and a mapping relationship between the slice information and at least one of the following: a PRACH resource and a preamble; the slice information is used by a terminal device to select a slice; and the mapping relationship is used by the terminal device to select a preamble and a PRACH resource that are corresponding to the slice to initiate a random access procedure.

15. A terminal device, comprising: a memory, a processor, and a computer program stored in the memory and executable on the processor, wherein when the computer program is executed by the processor, steps of the random access method according to any one of claims 1 to 6 are implemented.

16. A network device, comprising: a memory, a processor, and a computer program stored in the memory and executable on the processor, wherein when the computer program is executed by the processor, steps of the random access method according to any one of claims 7 to 12 are implemented.

17. A computer-readable storage medium, wherein the computer-readable storage medium stores a computer program, and when the computer program is executed by a processor, steps of the random access method according to any one of claims 1 to 12 are implemented.
